# EUROPÄISCHE PATENTSCHRIFT

(11) **EP 3 370 982 B1**
(45) Veröffentlichungstag und Bekanntmachung des Hinweises auf die Patenterteilung: **15.01.2020**
(21) Anmeldenummer: 16753930.3
(22) Anmeldetag: 22.08.2016
(51) Int. Cl.: B60C 19/00, B60C 19/12

(54) **FAHRZEUGLUFTREIFEN**
PNEUMATIC VEHICLE TIRE
PNEUMATIQUE DE VÉHICULE

(30) Priorität: 05.11.2015 DE 102015221698
(43) Veröffentlichungstag der Anmeldung: 12.09.2018
(73) Patentinhaber: Continental Reifen Deutschland GmbH, 30165 Hannover (DE)
(72) Erfinder: TYBURSKI, Andreas, 31241 Ilsede (DE); SCHÜRMANN, Oliver, 30855 Langenhagen (DE)
(74) Vertreter: Finger, Karsten
(86) Internationale Anmeldenummer: PCT/EP2016/069759
(87) Internationale Veröffentlichungsnummer: WO 2017/076531

(56) Entgegenhaltungen:
- EP-A1- 1 577 123
- EP-A2- 2 433 786
- DE-A1- 19 750 229
- DE-A1-102014 206 009
- JP-A- 2012 111 382
- US-A1- 2010 038 005

## Beschreibung

Die Erfindung betrifft Fahrzeugluftreifen mit einem in seinem Inneren an der dem Laufstreifen gegenüberliegenden Innenfläche haftend angebrachten Materialring, wobei der Materialring an einem selbsttätig abdichtenden Dichtmittel haftet, welches zumindest unmittelbar nach seinem Aufbringen eine zum Anhaften des Materialringes erforderliche Klebrigkeit aufweist, wobei der auf dem Dichtmittel angeordnete Materialring geschlossenzellig und luftdicht ist.

Ein derartiger Fahrzeugluftreifen ist aus der DE 10 2014 206009 A1 bekannt. Dieser Fahrzeugluftreifen ist mit einem Dichtmittel an seiner Innenfläche versehen, auf welchem ein geschlossenzelliger Materialring mit luftdichter Wirkung angeordnet ist. Auf dem geschlossenzelligen Materialring befindet sich ein Schall absorbierender, offenzelliger Schaumstoffring, welcher keinen Beitrag zur Dichtwirkung leistet. Beide Ringe, sowohl der offenzellige als auch der geschlossenzellige Schaumstoffring bieten keine optimale Dichtwirkung gegen Durchstiche, sie eine geringere Breite als die Dichtmittellage aufweisen.

Ein weiterer Fahrzeugluftreifen mit einem Ring aus offenzelligem Schaumstoff ist aus der DE 10 2007 028932 A1 bekannt. Der Materialring reduziert die Luftschwingung im Reifen und führt zu einer Verbesserung des Geräuschverhaltens im Fahrzeug. Der Schaumstoffring wird auch als 'Innenabsorber" bezeichnet. Das an der Reifeninnenseite nach dem Heizvorgang des Reifens nachträglich aufgebrachte Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.

Das Fließverhalten des Dichtmittels kann durch auf dem Dichtmittel aufliegende Bauteile nachteilig beeinflusst sein, so dass die erwünschte Dichtwirkung erst verspätet oder gar nicht eintritt. In Fällen, in denen der eindringende Fremdkörper aus dem Reifen wieder austritt und einen großen Luftkanal hinterlässt, ist eine zuverlässige Abdichtung durch das in seinem Fließverhalten nachteilig beeinflusste Dichtmittel besonders schwierig.

Der Erfindung liegt die Aufgabe zu Grunde, die Abdichtung des Reifens bei Durchstichen zu verbessern.

Gelöst wird die gestellte Aufgabe erfindungsgemäß dadurch, dass der geschlossenzellige Materialring mit seiner radial inneren Oberfläche vollflächig mit einer Abdeckfolie abgedeckt ist, entweder mit seiner radial äußeren Oberfläche vollflächig auf dem Dichtmittel aufliegt oder sich auf dem Dichtmittel mittels zwei oder mehr Stützen abstützt, wobei die Breite des geschlossenzelligen Materialringes etwa der Breite der Dichtmittellage entspricht.

Erfindungsgemäß dichtet der unmittelbar auf dem Dichtmittel aufliegende Ring aus geschlossenzelligem und luftdichtem Material bei einem Durchstich luftdicht ab. Durch diese zusätzliche Abdichtung des Materialringes ist die Dichtwirkung des Reifens bei Durchstichen trotz des in seinem Fließverhalten nachteilig beeinflussten Dichtmittels sichergestellt. In den Bereichen, in denen das Fließverhalten des Dichtmittels nicht durch einen aufliegenden Materialring nachteilig beeinflusst ist, dichtet das Dichtmittel nach wie vor zuverlässig ab.

Vorteilhaft ist es, wenn der geschlossenzellige Materialring aus Schaumstoff oder aus Kork oder aus Elastomer oder aus einer Kombination der vorgenannten Materialien besteht. Wesentlich ist, dass die vorgenannten Materialien leicht sind, also ein geringes spezifisches Gewicht aufweisen und eine luftdichte bzw. weitestgehend luftdichte Wirkung aufweisen.

Zweckmäßig ist es, wenn der geschlossenzellige Materialring und die Abdeckfolie mittels eines Klebemittels miteinander verklebt sind. Dadurch wird ein Verrutschen der Bauteile bei der Montage oder im Betrieb verhindert.

Zweckmäßig ist es, wenn der geschlossenzellige Materialring eine maximale radiale Dicke von ≤ 50 mm, vorzugsweise eine radiale Dicke von 20 mm bis 40 mm, aufweist. Der Großteil aller durchstechenden Fremdkörper ist kleiner als 35mm.

Vorteilhaft ist es, wenn die Abdeckfolie eine Dicke von 10µm bis 2mm, aufweist. Vorteil ist die Luftundurchlässigkeit auch bei Wechselbiegebeanspruchung und ausreichende Robustheit bei der Montage des Reifens auf die Felge.

Im Rahmen der Erfindung kommen sämtliche Dichtmittel in Frage, die selbsttätig abdichten und zumindest unmittelbar nach dem Aufbringen auf die innere Oberfläche des Reifens soweit klebrig sind, dass der Materialring angepresst und derart haftend mit dem Dichtmittel verbunden werden kann. Es eignen sich daher beispielsweise Dichtmittel auf Basis von Polyurethan oder Dichtmittel, welche eines viskose Mischung auf Basis eines Butylkautschukes, eines Polybutens oder auf Basis von Silikon sind.

Als Material für die Abdeckfolie eignen sich Kautschuk, Butylkautschuk, und verschiedene Polymere, wie z.B. Polyester, Polyurethan, Polyamid, Polyethylen, Polypropylen, Polyvinylchlorid, Polystyrol, Biopolymere, beispielsweise Nitrocellulose oder Celluloid.

Vorteilhaft ist es, wenn die Schichtdicke des Dichtmittels in denjenigen Bereichen, in denen der geschlossenzellige Materialring unmittelbar auf dem Dichtmittel aufliegt, ≤ 2 mm, vorzugsweise ≤ 1 mm beträgt, während die Schichtdicke des Dichtmittels in denjenigen Bereichen, in denen der geschlossenzellige Materialring nicht unmittelbar auf dem Dichtmittel aufliegt, größer ist, z.B. 2-8mm beträgt. In denjenigen Bereichen, in denen der geschlossenzellige Materialring auf dem Dichtmittel aufliegt, kann dieses in seiner Dicke reduziert werden, was sich vorteilhaft auf die Gestehungskosten des Reifens auswirkt. In denjenigen Bereichen, in denen kein Materialring auf dem Dichtmittel aufliegt, ist das Fließverhalten des viskosen Dichtmittels unbeeinflusst und dichtet in seiner üblichen Dicke von 2-8 mm, zuverlässig bei Durchstichen ab.

Zweckmäßig ist es, wenn die Stützen in Reifenumfangsrichtung oder quer zur Reifenumfangsrichtung, oder diagonal, durchgängig oder unterbrochen, angeordnet sind. Vorteil ist eine Verteilung der Kräfte in Umfangs- bzw. Quer-Richtung und eine optimierte Wechselbiegefestigkeit.

Weitere Merkmale, Vorteile und Einzelheiten der Erfindung werden nun anhand der Zeichnungen, welche schematische Ausführungsbeispiele darstellen, näher beschrieben. Dabei zeigen die:
Fig. 1 einen Querschnitt durch einen Fahrzeugluftreifen des Standes der Technik;
Fig. 2 einen Querschnitt durch einen erfindungsgemäßen Fahrzeugluftreifen;
Fig. 3 einen Querschnitt durch einen anderen erfindungsgemäßen Fahrzeugluftreifen;
Fig. 4 - 6 jeweils Querschnitte von erfindungsgemäßen Reifen, bei denen sich der Materialring mit Stützen auf dem Dichtmittel abstützt.

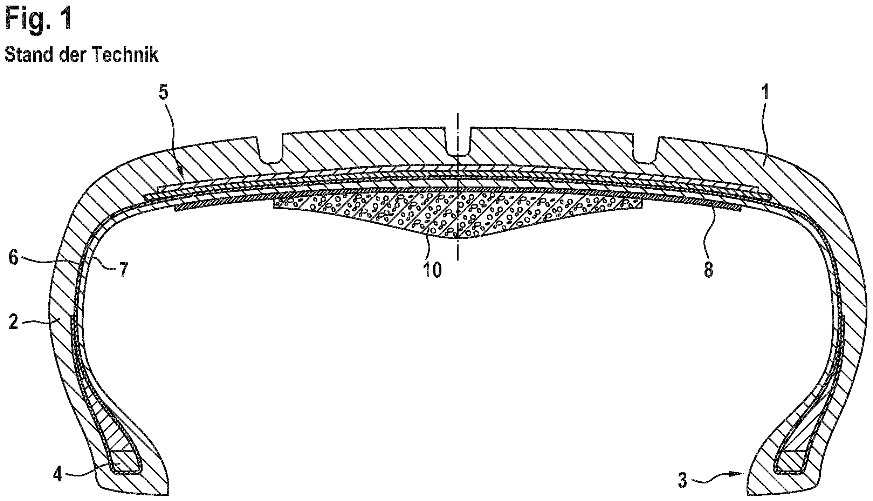

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein Dichtmittel 8 aufgebracht, welches in der Lage ist, sich bei Durchstich - Beschädigung des Reifens - selbstabdichtend zu verhalten. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt.

Im Inneren des Reifens an der dem Laufstreifen 1 gegenüberliegenden Innenfläche ist haftend ein Materialring 10 angebrachten. Der Materialring 10 haftet an dem selbsttätig abdichtenden Dichtmittel 8. Der Materialring 10 besteht aus offenzelligem Schaumstoff und dient als Schallabsorber. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 0,5 mm und 8 mm beträgt. Zumindest unmittelbar nach dem Aufbringen soll das Dichtmittel relativ flüssig und klebrig sein.

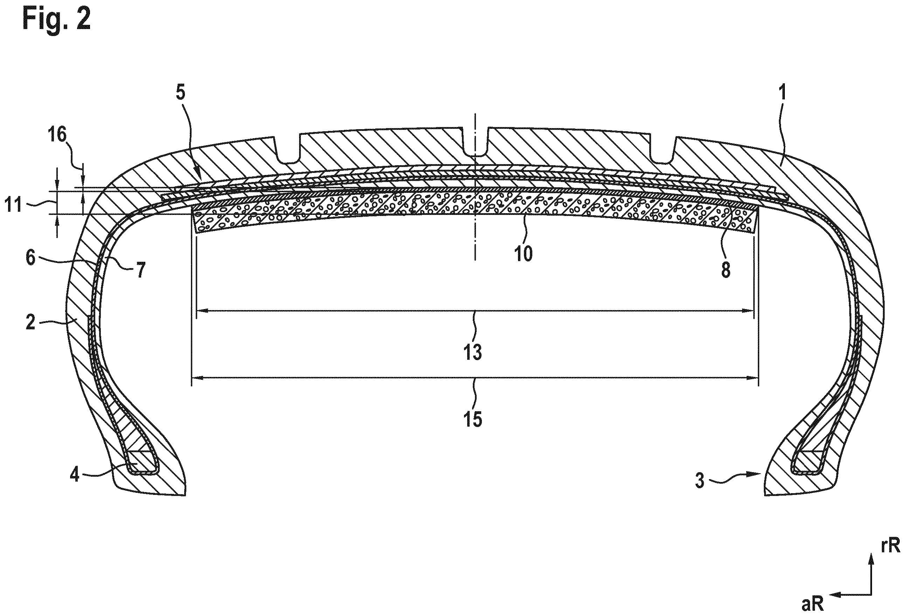

Die Fig. 2 zeigt einen Querschnitt durch einen erfindungsgemäßen Fahrzeugluftreifen. Der erfindungsgemäße Fahrzeugluftreifen unterscheidet sich von dem Fahrzeugluftreifen des Standes der Technik der Fig. 1 darin, dass auf dem Dichtmittel 8 ein geschlossenzelliger Materialring 10, hier ein geschlossenzelliger Schaumstoffring 10, mit luftdichter Wirkung angeordnet ist.

Der geschlossenzellige Schaumstoffring 10 weist einen etwa rechteckigen Querschnitt auf. Der geschlossenzellige Schaumstoffring 10 liegt mit seiner radial äußeren Oberfläche vollflächig auf dem Dichtmittel 8 auf. Die Breite 13 des geschlossenzelligen Schaumstoffringes 10 entspricht etwa der Breite 15 des Dichtmittels 8. Der geschlossenzellige Schaumstoffring 10 weist eine Dicke 11 von etwa 30 mm auf, gemessen in radialer Richtung (rR). Das Dichtmittel 8 ist ein Polyurethan-Gel. Das Dichtmittel 8 weist eine Dicke von 2mm auf. Erfindungsgemäß dichtet der unmittelbar auf dem Dichtmittel 8 aufliegende geschlossenzellige Schaumstoffring 10 bei einem Durchstich luftdicht ab. Durch diese Abdichtung des geschlossenzelligen Schaumstoffringes 10 ist die Dichtwirkung des Reifens bei Durchstichen und verbleibenden Luftkanälen nach Auswurf des eindringenden Gegenstandes trotz des in seinem Fließverhalten nachteilig beeinflussten Dichtmittels 8 sichergestellt.

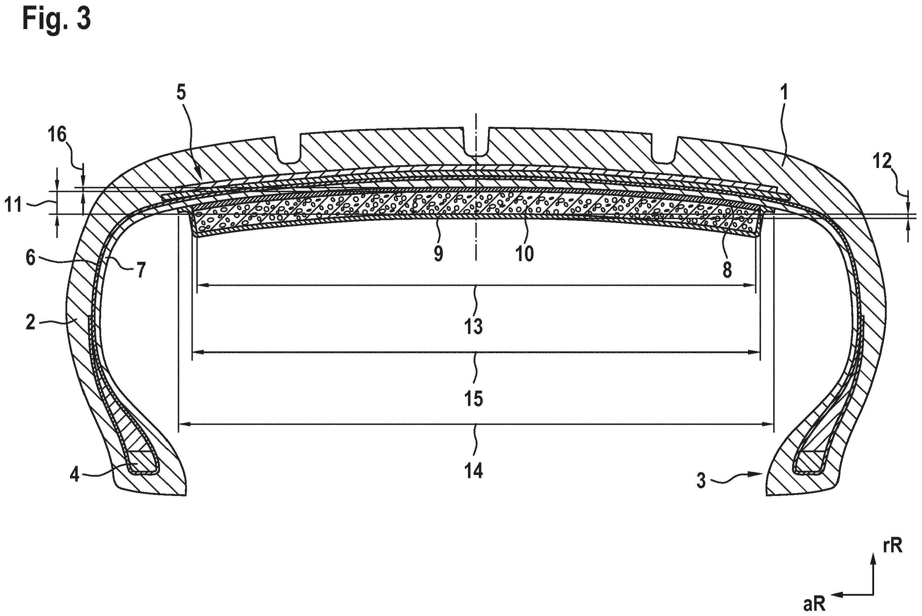

Die Fig. 3 zeigt einen Querschnitt durch einen anderen erfindungsgemäßen Fahrzeugluftreifen. Der Fahrzeugluftreifen der Fig. 3 unterscheidet sich von dem Fahrzeugluftreifen der Fig. 2 darin ,dass eine Abdeckfolie 9 von radial innen den geschlossenzelligen Schaumstoffring 10 abdeckt. Die Breite 14 der Abdeckfolie ist größer als die Breite 13 des Schaumstoffringes 10. Die Dicke 12 der Abdeckfolie beträgt zwischen 10µm bis 2mm.

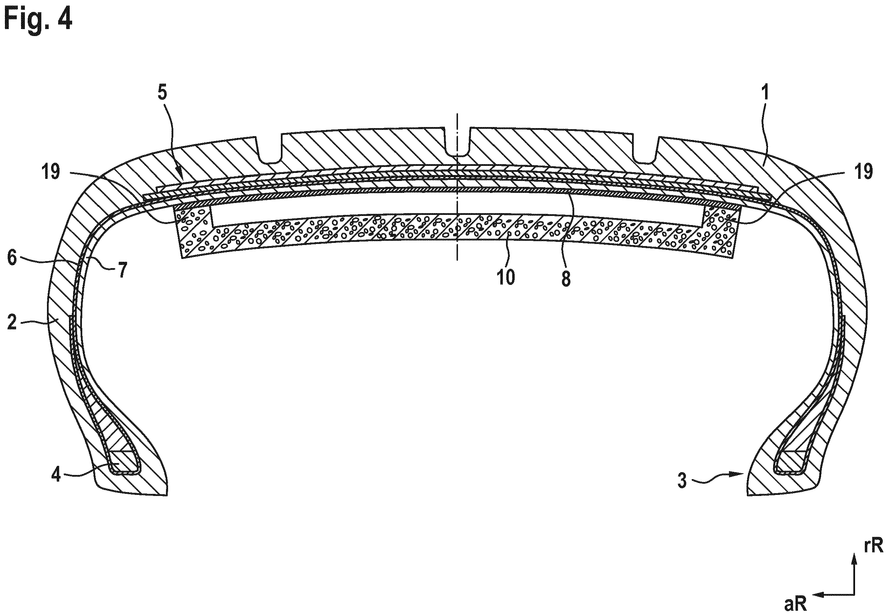

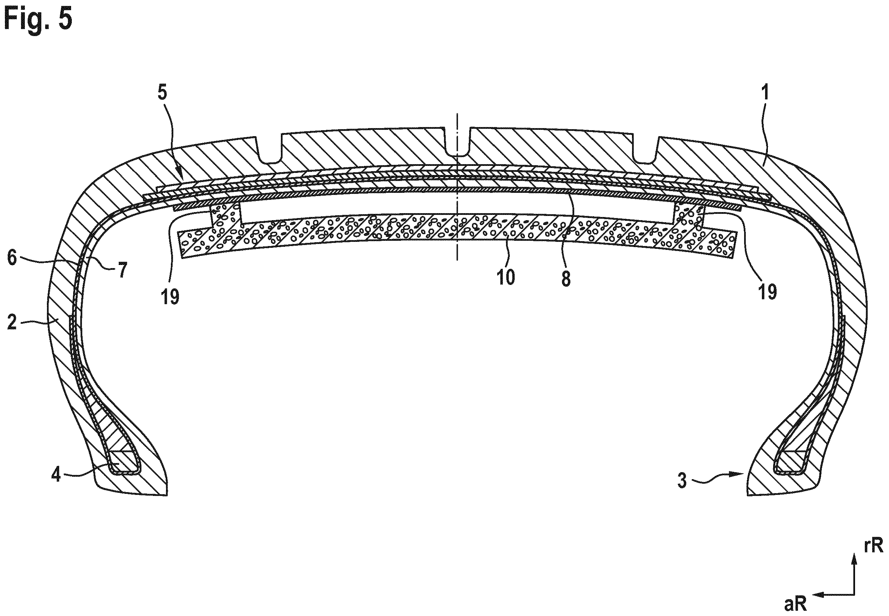

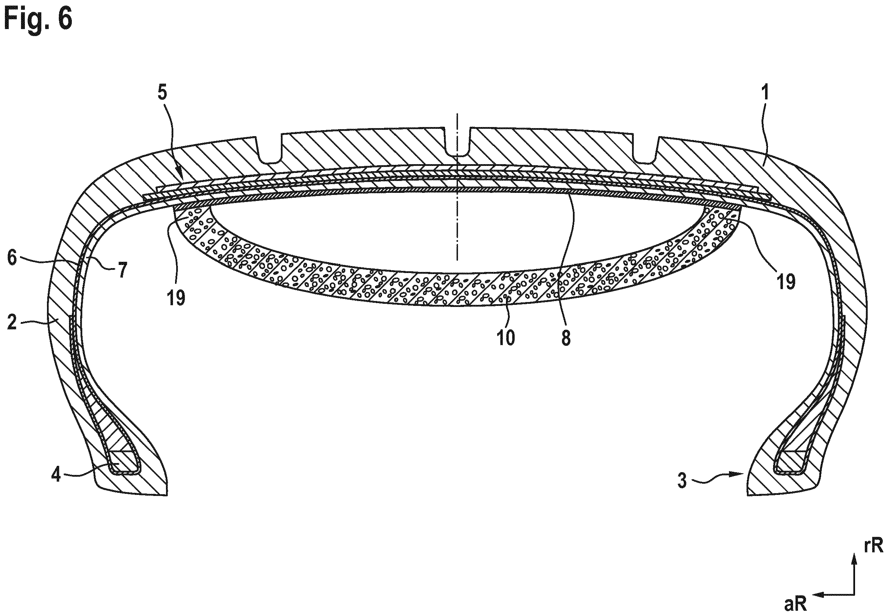

Die Fig. 4 bis 6 zeigen Querschnitte von erfindungsgemäßen Fahrzeugluftreifen Die drei Ausführungsformen zeigen den Materialring 10, welcher sich mit unterschiedlich ausgebildeten Stützen 19 auf der Dichtmittellage 8 abstützt.

### Bezugszeichenliste

- 1 .........: Laufstreifen
- 2.........: Seitenwand
- 3 .........: Wulstbereich
- 4.........: Wulstkern
- 5.........: Gürtelverband
- 6.........: Karkasseinlage
- 7.........: Innenschicht
- 8.........: Dichtmittellage
- 9.........: Abdeckfolie
- 10.......: geschlossenzelliger Schaumstoffring
- 11 .......: Dicke des geschlossenzelligen Schaumstoffringes
- 12 .......: Dicke der Abdeckfolie
- 13 .......: Breite des geschlossenzelligen Schaumstoffringes
- 14 .......: Breite der Abdeckfolie
- 15 .......: Breite der Dichtmittellage
- 16 .......: Dicke der Dichtmittellage
- 19.......: Stütze

## Patentansprüche

1. Fahrzeugluftreifen mit einem in seinem Inneren an der dem Laufstreifen (1) gegenüberliegenden Innenfläche haftend angebrachten Materialring (10), wobei der Materialring (10) an einem selbsttätig abdichtenden Dichtmittel (8) haftet, welches zumindest unmittelbar nach seinem Aufbringen eine zum Anhaften des Materialringes (10) erforderliche Klebrigkeit aufweist, wobei der auf dem Dichtmittel (8) angeordnete Materialring (10) geschlossenzellig und luftdicht ist, **dadurch gekennzeichnet, dass** der geschlossenzellige Materialring (10) mit seiner radial inneren Oberfläche vollflächig mit einer Abdeckfolie (9) abgedeckt ist, entweder mit seiner radial äußeren Oberfläche vollflächig auf dem Dichtmittel (8) aufliegt oder sich auf dem Dichtmittel (8) mittels zwei oder mehr Stützen (19) abstützt, wobei die Breite (13) des geschlossenzelligen Materialringes (10) etwa der Breite (15) der Dichtmittellage (8) entspricht.

2. Fahrzeugluftreifen nach Anspruch 1, **dadurch gekennzeichnet, dass** der geschlossenzellige Materialring (10) aus Schaumstoff oder aus Kork oder aus Elastomer oder aus einer Kombination der vorgenannten Materialien besteht.

3. Fahrzeugluftreifen nach Anspruch 1 oder 2, **dadurch gekennzeichnet, dass** die Abdeckfolie (9) mit dem geschlossenzelligen Materialring (10) und/oder der Reifeninnenschicht (7) mittels eines Klebemittels verklebt ist.

4. Fahrzeugluftreifen nach einem oder mehreren der vorangehenden Ansprüche, **dadurch gekennzeichnet, dass** der geschlossenzellige Materialring (10) eine maximale radiale Dicke (11) von ≤ 50 mm, vorzugsweise eine Dicke (11) von 20 mm bis 40 mm aufweist.

5. Fahrzeugluftreifen nach einem oder mehreren der vorangehenden Ansprüche, **dadurch gekennzeichnet, dass** die Abdeckfolie (9) eine radiale Dicke (12) von ≥ 10µm, vorzugsweise eine Dicke (12) von 10µm bis 2mm aufweist.

6. Fahrzeugluftreifen nach einem oder mehreren der vorangehenden Ansprüche, **dadurch gekennzeichnet, dass** das Dichtmittel (8) ein Polyurethan-Gel ist.

7. Fahrzeugluftreifen nach einem oder mehreren der vorangehenden Ansprüche 1 - 6, **dadurch gekennzeichnet, dass** das Dichtmittel (8) eine viskose Mischung auf Basis eines Butylkautschukes, eines Polybutens oder auf Basis von Silikon ist.

8. Fahrzeugluftreifen nach einem oder mehreren der vorangehenden Ansprüche, **dadurch gekennzeichnet, dass** die Breite (14) der Abdeckfolie (9) größer ist als die Breite (15) des Dichtmittels (8) und/oder die Breite (13) des geschlossenzelligen Materialringes (10).

9. Fahrzeugluftreifen nach einem der Ansprüche 1 bis 8, **dadurch gekennzeichnet, dass** die Dicke (16) der Dichtmittellage (8) in denjenigen Bereichen, in denen der geschlossenzellige Materialring (10) unmittelbar auf dem Dichtmittel (8) aufliegt, ≤ 2 mm, vorzugsweise ≤ 1 mm ist, während die Schichtdicke (16) des Dichtmittels (8) in denjenigen Bereichen, in denen der geschlossenzellige Materialring nicht zum Abdichten beiträgt 0,5-8mm beträgt.

10. Fahrzeugluftreifen nach einem der Ansprüche 1 bis 9, **dadurch gekennzeichnet, dass** die Stützen in Reifenumfangsrichtung oder senkrecht zur Reifenumfangsrichtung oder in einem Winkel zwischen den vorgenannten, durchgängig oder unterbrochen, angeordnet sind.

11. Fahrzeugluftreifen nach einem oder mehreren der vorangehenden Ansprüche, **dadurch gekennzeichnet, dass** das Material der Abdeckfolie Kautschuk, Butylkautschuk oder verschiedene Polymere, wie z.B. Polyester, Polyurethan, Polyamid, Polyethylen, Polypropylen, Polyvinylchlorid, Polystyrol, Biopolymere, beispielsweise Nitrocellulose oder Celluloid oder eine Kombination daraus ist.

12. Fahrzeugluftreifen nach einem oder mehreren der vorangehenden Ansprüche, **dadurch gekennzeichnet, dass** die Abdeckfolie durch Aufsprühen eines flüssigen Materials in den Reifen aufgebracht wird.

13. Fahrzeugluftreifen nach einem oder mehreren der vorangehenden Ansprüche, **dadurch gekennzeichnet, dass** die Abdeckfolie stark dehnbar ist und der geschlossenzellige Materialring (10) als Abstandshalter zwischen Reifen und dieser Folie dient.

## Claims

1. Pneumatic vehicle tyre with a material ring (10) inside it, adhesively attached to the inner surface opposite from the tread (1), the material ring (10) adhering to a self-sealing sealant (8), which at least immediately after its application has a tackiness required for the adhesive attachment of the material ring (10), the material ring (10) arranged on the sealant (8) being closed-cell and airtight, **characterized in that** the closed-cell material ring (10) is covered over its radially inner surface completely with a covering film (9), either lies with its radially outer surface fully flush on the sealant (8) or is supported on the sealant (8) by means of two or more supports (19), the width (13) of the closed-cell material ring (10) corresponding approximately to the width (15) of the sealant ply (8).

2. Pneumatic vehicle tyre according to Claim 1, **characterized in that** the closed-cell material ring (10) consists of foam or of cork or of elastomer or of a combination of the aforementioned materials.

3. Pneumatic vehicle tyre according to Claim 1 or 2, **characterized in that** the covering film (9) is bonded to the closed-cell material ring (10) and/or the tyre inner layer (7) by means of an adhesive.

4. Pneumatic vehicle tyre according to one or more of the preceding claims, **characterized in that** the closed-cell material ring (10) has a maximum radial thickness (11) of ≤ 50 mm, preferably a thickness (11) of 20 mm to 40 mm.

5. Pneumatic vehicle tyre according to one or more of the preceding claims, **characterized in that** the covering film (9) has a radial thickness (12) of ≥ 10 µm, preferably a thickness (12) of 10 µm to 2 mm.

6. Pneumatic vehicle tyre according to one or more of the preceding claims, **characterized in that** the sealant (8) is a polyurethane gel.

7. Pneumatic vehicle tyre according to one or more of the preceding claims 1 - 6, **characterized in that** the sealant (8) is a viscous mixture based on butyl rubber, a polybutene or based on silicone.

8. Pneumatic vehicle tyre according to one or more of the preceding claims, **characterized in that** the width (14) of the covering film (9) is greater than the width (15) of the sealant (8) and/or the width (13) of the closed-cell material ring (10).

9. Pneumatic vehicle tyre according to one of Claims 1 to 8, **characterized in that** the thickness (16) of the sealant ply (8) in those regions in which the closed-cell material ring (10) lies directly on the sealant (8) is ≤ 2 mm, preferably ≤ 1 mm, while the layer thickness (16) of the sealant (8) in those regions in which the closed-cell material ring does not contribute to the sealing is 0.5-8 mm.

10. Pneumatic vehicle tyre according to one of Claims 1 to 9, **characterized in that** the supports are arranged in the circumferential direction of the tyre or perpendicular to the circumferential direction of the tyre or at an angle between the aforementioned, continuously or discontinuously.

11. Pneumatic vehicle tyre according to one or more of the preceding claims, **characterized in that** the material of the covering film is rubber, butyl rubber or various polymers, such as for example polyester, polyurethane, polyamide, polyethylene, polypropylene, polyvinyl chloride, polystyrene, biopolymers, for example nitrocellulose or celluloid, or a combination thereof.

12. Pneumatic vehicle tyre according to one or more of the preceding claims, **characterized in that** the covering film is applied by spraying on a liquid material into the tyre.

13. Pneumatic vehicle tyre according to one or more of the preceding claims, **characterized in that** the covering film is highly stretchable and the closed-cell material ring (10) serves as a spacer between the tyre and this film.

## Revendications

1. Pneumatique de véhicule comprenant un anneau de matériau (10) monté à l'intérieur du pneumatique de manière adhésive à la surface intérieure opposée à la bande de roulement (1), l'anneau de matériau (10) adhérant à un agent d'étanchéité auto-étanchéifiant (8) qui présente au moins immédiatement après son application un pouvoir adhérant nécessaire à l'adhérence de l'anneau de matériau (10), l'anneau de matériau (10) disposé sur l'agent d'étanchéité (8) étant à cellules fermées et étanche à l'air, **caractérisé en ce que** l'anneau de matériau à cellules fermées (10) est recouvert entièrement, sur sa surface radialement intérieure, d'un film de recouvrement (9), vient entièrement en appui, avec sa surface radialement extérieure, sur l'agent d'étanchéité (8) ou s'appuie sur l'agent d'étanchéité (8) à l'aide d'au moins deux supports (19), la largeur (13) de l'anneau de matériau à cellules fermées (10) correspondant à peu près à la largeur (15) de la couche d'agent d'étanchéité (8).

2. Pneumatique de véhicule selon la revendication 1, **caractérisé en ce que** l'anneau de matériau à cellules fermées (10) comprend de la mousse ou du liège ou de l'élastomère ou une combinaison desdits matériaux.

3. Pneumatique de véhicule selon la revendication 1 ou 2, **caractérisé en ce que** le film de recouvrement (9) comprenant l'anneau de matériau à cellules fermées (10) et/ou la couche de pneumatique intérieure (7) est collé au moyen d'un adhésif.

4. Pneumatique de véhicule selon l'une au moins des revendications précédentes, **caractérisé en ce que** l'anneau de matériau à cellules fermées (10) a une épaisseur radiale maximale (11) de ≤ 50 mm, de préférence une épaisseur (11) allant de 20 mm à 40 mm.

5. Pneumatique de véhicule selon l'une au moins des revendications précédentes, **caractérisé en ce que** le film de recouvrement (9) a une épaisseur radiale (12) de ≥ 10 mm, de préférence une épaisseur (12) allant de 10 µm à 2 mm.

6. Pneumatique de véhicule selon l'une au moins des revendications précédentes, **caractérisé en ce que** le moyen d'étanchéité (8) est un gel de polyuréthane.

7. Pneumatique de véhicule selon l'une au moins des revendications précédentes 1 à 6, **caractérisé en ce que** le moyen d'étanchéité (8) est un mélange visqueux à base de caoutchouc butyle, de polybutène ou à base de silicone.

8. Pneumatique de véhicule selon l'une au moins des revendications précédentes, **caractérisé en ce que** la largeur (14) du film de recouvrement (9) est supérieure à la largeur (15) de l'agent d'étanchéité (8) et/ou à la largeur (13) de l'anneau de matériau à cellules fermées (10).

9. Pneumatique de véhicule selon l'une des revendications 1 à 8, **caractérisé en ce que** l'épaisseur (16) de la couche d'agent d'étanchéité (8), dans les zones dans lesquelles l'anneau de matériau à cellules fermées (10) est en appui direct sur l'agent d'étanchéité (8), est ≤ 2 mm, de préférence ≤ 1 mm, tandis que l'épaisseur de couche (16) de l'agent d'étanchéité (8), dans les zones dans lesquelles l'anneau de matériau à cellules fermées ne contribue pas à l'étanchéité, est comprise entre 0,5 et 8 mm.

10. Pneumatique de véhicule selon l'une des revendications 1 à 9, **caractérisé en ce que** les supports sont disposés, de manière continue ou discontinue, dans la direction circonférentielle du pneumatique ou perpendiculairement à la direction circonférentielle du pneumatique ou selon un angle compris entre ceux-ci.

11. Pneumatique de véhicule selon l'une au moins des revendications précédentes, **caractérisé en ce que** le matériau du film de recouvrement est le caoutchouc, le caoutchouc butyle ou divers polymères, par exemple le polyester, le polyuréthane, le polyamide, le polyéthylène, le polypropylène, le chlorure de polyvinyle, le polystyrène, les biopolymères, par exemple, la nitrocellulose ou le celluloïd, ou une combinaison de ceux-ci.

12. Pneumatique de véhicule selon l'une au moins des revendications précédentes, **caractérisé en ce que** le film de recouvrement est appliqué par pulvérisation d'un matériau liquide dans le pneumatique.

13. Pneumatique de véhicule selon l'une au moins des revendications précédentes, **caractérisé en ce que** le film de recouvrement est très extensible et l'anneau de matériau à cellules fermées (10) sert d'éléments d'espacement entre le pneumatique et ce film.
